(19) Europäisches Patentamt
European Patent Office
Office européen des brevets

(11) **EP 1 230 298 B1**

(12) **FASCICULE DE BREVET EUROPEEN**

(45) Date de publication et mention de la délivrance du brevet:
**09.07.2003 Bulletin 2003/28**

(21) Numéro de dépôt: **00969650.1**

(22) Date de dépôt: **19.10.2000**

(51) Int Cl.7: **C08K 13/02**, C08K 5/3435, C08K 5/3492, C08L 83/04

(86) Numéro de dépôt international:
**PCT/FR00/02915**

(87) Numéro de publication internationale:
**WO 01/029127 (26.04.2001 Gazette 2001/17)**

(54) **COMPOSITION POLYORGANOSILOXANE MONOCOMPOSANTE DURCISSANT EN ELASTOMERE NON JAUNISSANT DES LA TEMPERATURE AMBIANTE EN PRESENCE D'HUMIDITE**

BEI UMGEBUNGSTEMPERATUR DURCH FEUCHTIGKEIT ZUM NICHTGILBENDEM ELASTOMER HÄRTENDE EINKOMPONENTEN POLYRORGANOSILOXANZUSAMMENSETZUNG

SINGLE-CONSTITUENT POLYORGANOSILOXANE COMPOSITION ROOM TEMPERATURE CURABLE INTO NON-YELLOWING ELASTOMER IN THE PRESENCE OF MOISTURE

(84) Etats contractants désignés:
**AT BE CH CY DE DK ES FI FR GB GR IE IT LI LU MC NL PT SE**

(30) Priorité: **20.10.1999 FR 9913080**

(43) Date de publication de la demande:
**14.08.2002 Bulletin 2002/33**

(73) Titulaire: **RHODIA CHIMIE**
**92408 Courbevoie Cédex (FR)**

(72) Inventeurs:
- **DALBE, Bernard**
**F-69005 Lyon (FR)**
- **PUJOL, Jean-Marc**
**F-69140 Rillieux (FR)**

(74) Mandataire: **Trolliet, Maurice**
**RHODIA SERVICES**
**Direction de la Propriété Industrielle**
**CRIT-Carrières - BP 62**
**69192 Saint-Fons Cédex (FR)**

(56) Documents cités:
**EP-A- 0 573 113**
**EP-A- 0 659 930**
**EP-A- 0 735 101**
**EP-A- 0 853 101**
**US-A- 5 232 982**

- **PATENT ABSTRACTS OF JAPAN vol. 1997, no. 07, 31 juillet 1997 (1997-07-31) & JP 09 087611 A (SEKISUI CHEM CO LTD), 31 mars 1997 (1997-03-31)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 230 298 B1

## Description

La présente invention concerne de nouvelles compositions monocomposantes à base de polyorganosiloxane (s) réticulant en élastomères non jaunissants et adhérents, en opérant dès la température ambiante (c'est-à-dire dans un intervalle de températures allant de 5°C à 35°C) et en présence d'humidité.

Les élastomères silicones, appelés communément mastics, sont utilisés dans de nombreuses applications telles que l'étanchéité et l'assemblage. Parmi l'ensemble des propriétés demandées dans ces applications, l'adhérence sur des supports très variés (métalliques, plastiques, bois) est une propriété très importante.

Pour atteindre un niveau acceptable en ce qui concerne les performances adhésives, des promoteurs d'adhérence, généralement des silanes porteurs de groupements fonctionnels, sont introduits dans les formulations de mastics. A titre d'exemples, on utilise l'aminopropyl triéthoxy silane et le bêta aminoéthyl gamma aminopropyl triméthoxy silane.

Toutefois, l'utilisation de ce type de promoteur d'adhérence, bien que performante, possède des inconvénients. On observe notamment un jaunissement de l'élastomère, plus particulièrement lorsque celui-ci n'est pas soumis à une exposition aux rayons U.V..

Les performances de ces compositions sont également parfois insuffisantes en adhérence sur certains supports tels que ceux du type PVC. Cette insuffisance en adhérence peut être limitée en augmentant fortement la dose de silane aminé (autour de 1,5 % en poids). Dans ce cas, le phénomène de jaunissement de l'élastomère est accentué, celui-ci étant lié au taux de silane aminé présent dans l'élastomère.

La présente invention a pour but de proposer des compositions neutralisant les problèmes de jaunissement liés à l'utilisation des silanes aminés et présentant au moins des propriétés similaires à celles des compositions de l'art antérieur, notamment pour leur stabilité au stockage.

Les nouvelles compositions monocomposantes proposées ont des propriétés d'adherence optimisées pour permettre leur utilisation sur des supports très variés.

L'adhérence est très bonne sur divers substrats, en particulier les matières plastiques comme par exemple le polychlorure de vinyle (PVC) et le polyméthacrylate de méthyle (PMMA).

Ces compositions polyorganosiloxanes monocomposantes peuvent être préparées en utilisant indifféremment un mode discontinu ("batch") ou un mode continu.

Il a donc été trouvé, et c'est ce qui fait l'objet de la présente invention, des compositions monocomposantes à base de polyorganosiloxane(s), stables au stockage en absence d'humidité et réticulant en élastomères non jaunissants et adhérents en présence d'humidité, caractérisées en ce qu'elles comprennent :

(1i) 100 parties en poids d'au moins un polyorganopolysiloxane linéaire réticulable **A** de formule :

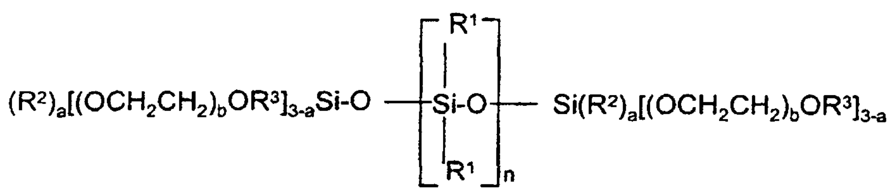

dans laquelle :

- les substituants $R^1$, identiques ou différents, représentent chacun un radical monovalent hydrocarboné saturé ou non en $C_1$ à $C_{13}$, substitué ou non substitué, aliphatique, cyclanique ou aromatique ;
- les substituants $R^2$, identiques ou différents, représentent chacun un radical monovalent hydrocarboné saturé ou non en $C_1$ à $C_{13}$, substitué ou non substitué, aliphatique, cyclanique ou aromatique ;
- les substituants $R^3$, identiques ou différents, représentent chacun un radical alkyle, linéaire ou ramifié, en $C_1$ à $C_8$ ;
- n a une valeur suffisante pour conférer au polyorganopolysiloxane de formule **A** une viscosité dynamique à 25°C allant de 1.000 à 1.000.000 mPa.s ;
- a est zéro ou 1 ;
- b représente zéro ou 1 ;

(2i) 2 à 170 parties en poids de charges minérales **G** ;
(3i) une quantité efficace d'un catalyseur de durcissement **H** choisi parmi :

- les amines et sels de métaux dont le Sn, Zn, Fe, Pb, Ba et Zr,
- les dérivés organiques du titane,
- et les chélates d'étain,

(4i) 0,2 à 6 parties en poids d'un agent aminé **M** constitué d'au moins une amine cyclique encombrée ;
(5i) 0,2 à 8 parties en poids d'au moins un agent promoteur d'adhérence **P** choisi parmi les composés organosiliciques portant à la fois (1) au moins un groupe hydrolysable lié à l'atome de silicium et (2) au moins un groupe organique comprenant un radical alkyle linéaire ou ramifié comprenant de 1 à 8 atomes de carbone dont au moins l'un des carbones porte un groupement amine primaire ou secondaire.

Outre les composants (1i) à (5i), la composition selon l'invention peut contenir de 0 à 50 parties de diorganopolysiloxane linéaire non réactif F de formule :

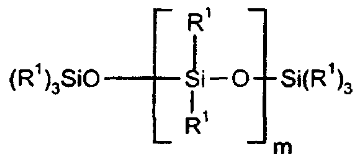

(III)

Selon une variante préférée de l'invention, les substituants $R^1$ des polyorganosiloxanes **A** et des polymères facultatifs **F** sont choisis dans le groupe formé par :

- les radicaux alkyles et halogénoalkyles ayant de 1 à 13 atomes de carbone,
- les radicaux cycloalkyles et halogénocycloalkyles ayant de 5 à 13 atomes de carbone,
- les radicaux alcényles ayant de 2 à 8 atomes de carbone,
- les radicaux aryles et halogénoaryles mononucléaires ayant de 6 à 13 atomes de carbone,
- les radicaux cyanoalkyles dont les chaînons alkyles ont de 2 à 3 atomes de carbone.

Plus particulièrement, les substituants $R^1$ sont les radicaux méthyle, éthyle, propyle, isopropyle, n-hexyle, phényle, vinyle et 3,3,3-trifluoropropyle.
Les compositions polyorganopolysiloxanes monocomposantes conformes à la présente invention selon l'invention peuvent être préparées selon divers modes opératoires aussi bien en discontinu qu'en continu.
En général, les compositions sont préparées à l'abri de l'humidité en opérant dans un apareillage fermé, muni d'une agitation, dans lequel on peut au besoin faire le vide, puis remplacer éventuellement l'air chassé par un gaz inerte anhydre, par exemple par de l'azote. A titre d'exemples d'appareillages, on peut citer : les disperseurs lents, les malaxeurs à pale, à hélice, à bras, à ancre, les malaxeurs planétaires, les malaxeurs à crochet, les extrudeuses à vis unique ou à plusieurs vis.
A titre d'exemple de mode opératoire, la composition peut être préparée dans un réacteur fermé sous agitation en suivant les 3 étapes successives définies ci-dessous :

**1 :** étape de fonctionnalisation au cours de laquelle on fait réagir :

(1') au moins un diorganopolysiloxane linéaire réactif **A'** comprenant un groupement hydroxyle à chaque extrémité de chaîne, de formule :

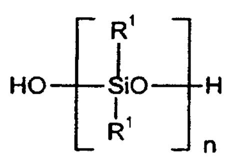

(I)

dans laquelle :

- les substituants $R^1$, identiques ou différents, ont les mêmes significations que celles données ci-avant pour le polyorganopolysiloxane **A**;
- n a une valeur suffisante pour conférer aux diorganopolysiloxanes de formule (I) une viscosité dynamique à 25°C allant de 1.000 à 1.000.000 mPa.s ;

(2') avec au moins un polyalkoxysilane **B** de formule :

$$(R^2)_aSi[(OCH_2CH_2)_bOR^3]_{4-a} \qquad (II)$$

dans laquelle les substituants $R^2$, $R^3$, a et b, identiques ou différents, ont les mêmes significations que celles données ci-avant pour le polyorganosiloxane **A** ;
(3') en opérant la réaction de (1') avec (2') en présence d'une quantité catalytiquement efficace d'un catalyseur **D** de fonctionnalisation ;
(4') le milieu réactionnel de l'étape **1** pouvant comprendre en outre :

- au moins un alcool aliphatique **E** en $C_1$ à $C_3$ ; et/ou
- au moins un diorganopolysiloxane linéaire non réactif **F** de formule :

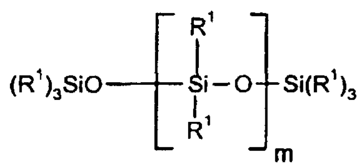
(III)

dans laquelle :
+ les substituants $R^1$, identiques ou différents, ont les mêmes significations que celles données ci-avant pour le polyorganopolysiloxane **A** ;
+ m a une valeur suffisante pour conférer aux polymères de formule (III) une viscosité dynamique à 25°C allant de 10 à 200.000 mPa.s ;

**2 :** étape de mélange (ou de "compoundage") au cours de laquelle on introduit dans le milieu de fonctionnalisation de l'étape **1,** maintenu sous agitation, dans un ordre quelconque :

(5') une charge minérale **G** à base de silice amorphe et éventuellement d'autres charges ;
(6') une quantité efficace d'un catalyseur de durcissement **H** ;
(7') au moins un agent aminé **M** constitué d'au moins une amine cyclique encombrée ;
(8') au moins un agent promoteur d'adhérence **P** ;
(9') en option au moins un diorganopolysiloxane linéaire non réactif **F** répondant à la formule (III) mentionnée ci-avant ;

**3 :** étape de finition au cours de laquelle le mélange de base obtenu, maintenu sous agitation, est soumis à une opération de dévolatilisation effectuée sous une pression inférieure à la pression atmosphérique.

Pour ce mode opératoire, il est recommandé d'utiliser un appareillage permettant:

- de brasser intimement, à l'abri de l'humidité : dans l'étape 1, les constituants **A**, **B**, **D**, **E** et **F** ; puis dans l'étape 2, le mélange réactionnel de l'étape 1 complété par l'ajout des constituants **G**, **H**, **F**, **M** et **P**, **G** étant ajouté de préférence en premier ;
- et d'évacuer dans l'étape 3 les matières volatiles présentes (polymères de bas poids moléculaires, alcool formé au cours de la réaction de fonctionnalisation, alcool E éventuellement utilisé).

Pour préparer la composition organopolysiloxane monocomposante selon ce mode opératoire, on utilise sur la base de 100 parties en poids de diorganopolysiloxane (s) linéaire(s) hydroxylé(s) **A** :

- une quantité catalytiquement efficace de catalyseur de fonctionnalisation **D**,
- de 1 à 10 parties de polyalkoxysilane(s) **B** ,
- de 0 à 50 parties de diorganopolyasiloxane(s) linéaire(s) non réactif(s) **F** ,
- de 2 à 170 parties de charge minérale **G** ,
- de 0,3 à 5 parties d'un catalyseur de durcissement **H** ,
- de 0,2 à 6 d'agent aminé **M** ,
- de 0.2 à 8 de promoteur d'adhérence **P**.

La préparation du polyorganosiloxane **A** est en général effectuée par réaction de polycondensation. La composition selon l'invention peut être aussi préparée à partir d'autres modes opératoires. A ce sujet, on se reportera au document US 5.674.936 (notamment exemple 3) ou document FR 2,742763.

L'agent aminé **M** comporte au moins une amine cyclique encombrée. Cette amine peut être notamment choisie parmi le groupe constitué de :

**(1i)** une amine cyclique encombrée stériquement de formule (IV) :

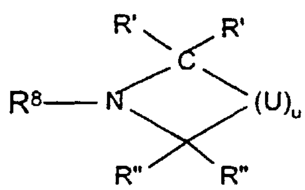

dans laquelle :

- ♦ $R^8$ est choisi parmi le radical hydrogène, les radicaux alkyles linéaires ou ramifiés ayant 1 à 3 atomes de carbone et le radical phényle,
- ♦ R' et R", identiques ou différents, correspondent à un radical alkyle linéaire ou ramifié contenant entre 1 et 12 atomes de carbone, et pouvant contenir ou être substitué par au moins un hétéroatome, de préférence un atome d'oxygène, de soufre ou d'azote,
- ♦ U est un radical méthylène, et u est compris entre 2 et 9 pour former un cycle pouvant :

  · contenir au moins un hétéroatome, de préférence un atome d'oxygène, de soufre ou d'azote, et/ou
  · être substitué par au moins un hétéroatome, un radical alkyle linéaire ou ramifié contenant 1 à 4 atomes, l'hétéroatome étant de
  préférence un atome d'oxygène, de soufre ou d'azote,

(2i) une amine constituée de motifs de formule (IV) reliés entre eux par au moins un radical silicone et/ou organique, saturé ou non saturé, au moins divalent $R^9$, choisi de préférence parmi le groupe constitué de :

- ♦ les radicaux alkylènes linéaires ou ramifiés, ayant 2 à 18 atomes de carbone ;
- ♦ les radicaux alkylène-carbonyle dont la partie alkylène linéaire ou ramifiée, comporte 2 à 20 atomes de carbone ;
- ♦ les radicaux alkylène-cyclohexylène dont la partie alkylène linéaire ou ramifiée, comporte 2 à 12 atomes de carbone et la partie cyclohexylène comporte un groupement OH et éventuellement 1 ou 2 radicaux alkyles ayant 1 à 4 atomes de carbone ;
- ♦ les radicaux de formule $-R^{10}$ -O- $R^{10}$- dans laquelle les radicaux $R^{10}$ identiques ou différents représentent des radicaux alkylènes ayant 1 à 12 atomes de carbone ;
- ♦ les radicaux de formule - $R^{10}$-O- $R^{10}$- dans laquelle les radicaux $R^{10}$ ont les significations indiquées précédemment et l'un d'entre eux ou les deux sont substitués par un ou deux groupement(s) -OH ;
- ♦ les radicaux de formule - O -CO- $R^{10}$- dans laquelle le radical $R^{10}$ a la signification indiquée précédemment ;
- ♦ les radicaux de formule -O-C $R^{10}$-CO-O- dans laquelle le radical $R^{10}$ a la signification indiquée précédemment ;
- ♦ les radicaux de formule - $R^{10}$-CO-O- $R^{10}$ - dans laquelle les radicaux $R^{10}$ ont les significations indiquées précédemment ;
- ♦ les radicaux de formule $-R^{11}$-O-$R^{12}$-O-CO-$R^{11}$- dans laquelle les radicaux $R^{11}$ et $R^{12}$ identiques ou différents,

représentent des radicaux alkylènes ayant 2 à 12 atomes de carbone et le radical $R^{12}$ est éventuellement substitué par un radical hydroxyle ;

- un groupement trivalent de formule :

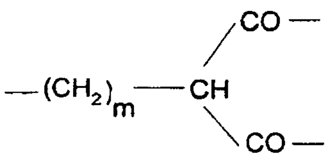 où m représente un nombre de 2 à 20 :

- et un groupement trivalent de formule ;

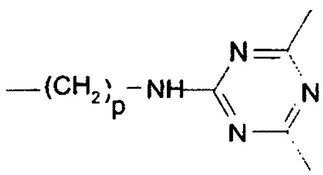 où p représente un nombre de 2 à 20.

(3i) une amine reliée à au moins un polyorganosiloxane (B) linéaire, cyclique ou tridimensionnel, de masse moléculaire de 200 à 200 000 et, comprenant des motifs identiques ou différents de formule générale (V) :

$$R'''_a \, V_b \, SiO_{[4-(a+b)]/2} \qquad (V)$$

dans laquelle :

(1) a = 0, 1 ou 2, b = 1, 2 ou 3 et $a+b \leq 3$

(2) les symboles **R'''** sont identiques et/ou différents et représentent un radical hydrocarboné monovalent choisi parmi les radicaux alkyles linéaires ou ramifiés ayant de 1 à 12 atomes de carbone, les radicaux alkoxy linéaires ou ramifiés ayant de 1 à 4 atomes de carbone, un radical phényle et, de préférence un radical hydroxy, un radical éthoxy, un radical méthoxy ou un radical méthyle ;

(3) les symboles **V** sont des restes fonctionnels, identiques et/ou différents, et représentent un reste à groupe (s) pipéridinyle(s) stériquement encombré(s) choisi parmi :

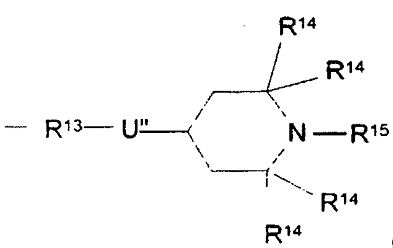 (VI) ou 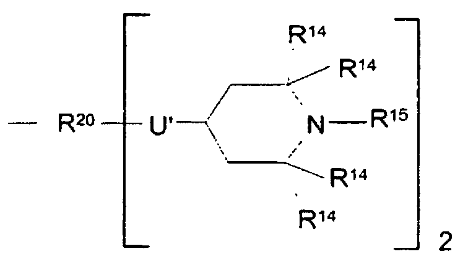 (VII)

Pour les restes de formule (VI) :

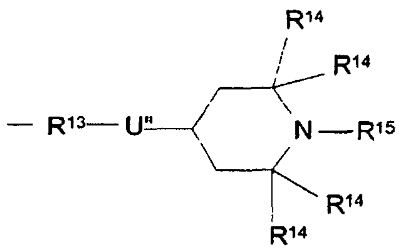

(VI)

- $R^{13}$ est un radical hydrocarboné divalent choisi parmi ;

  * les radicaux alkylènes linéaires ou ramifiés, ayant 2 à 18 atomes de carbone ;

  * les radicaux alkylène-carbonyle dont la partie alkylène linéaire ou ramifiée comporte 2 à 20 atomes de carbone ;

  * les radicaux alkylène-cyclohexylène dont la partie alkylène linéaire

  ou ramifiée comporte 2 à 12 atomes de carbone et la partie cyclohexylène comporte un groupement OH et éventuellement 1 ou 2 radicaux alkyles ayant 1 à 4 atomes de carbone ;

  * les radicaux de formule $-R^{16}$ - O - $R^{16}$ dans laquelle les radicaux $R^4$ identiques ou différents représentent des radicaux alkylènes ayant 1 à 12 atomes de carbone ;
  * les radicaux de formule $-R^{16}$ - O - $R^{16}$ dans laquelle les radicaux $R^{16}$ ont les significations indiquées précédemment et l'un d'entre eux ou les deux sont substitués par un ou deux groupement(s) - OH ;
  * les radicaux de formule $-R^{16}$-COO-$R^{16}$ dans laquelle les radicaux $R^4$ ont les significations indiquées précédemment ;
  * les radicaux de formule $-R^{17}$-O-$R^{18}$- O-CO-$R^{17}$ dans laquelle les radicaux $R^{17}$ et $R^{18}$ identiques ou différents, représentent des radicaux alkylènes ayant 2 à 12 atomes de carbone et le radical $R^{18}$ est éventuellement substitué par un radical hydroxyle ;

- U" représente -O- ou $-NR^{19}$-, $R^{19}$ étant un radical choisi parmi un atome d'hydrogène, un radical alkyle linéaire ou ramifié comportant 1 à 6 atomes de carbone et un radical divalent de formule :

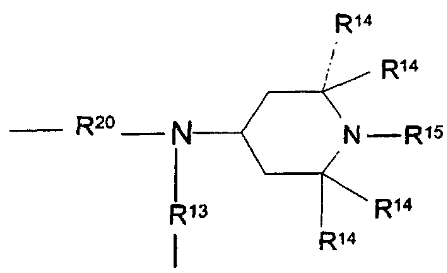

dans laquelle $R^{13}$ a la signification indiquée précédemment, $R^{14}$ et $R^{15}$ ont les significations indiquées ci-après et $R^{20}$ représente un radical divalent alkylène, linéaire ou ramifié, ayant de 1 à 12 atomes de carbone, l'un des liens valentiels (celui de $R^{20}$) étant relié à l'atome de $-NR^{19}$-, l'autre (celui de $R^{13}$) étant relié à un atome de silicium ;

- les radicaux $R^{14}$, identiques ou différents, sont choisis parmi les radicaux alkyles linéaires ou ramifiés ayant 1 à 3 atomes de carbone et le radical phényle,
- le radical $R^{15}$ représente un radical hydrogène ou le radical $R^{14}$ ou O•.

Pour les restes de formule (VII) :

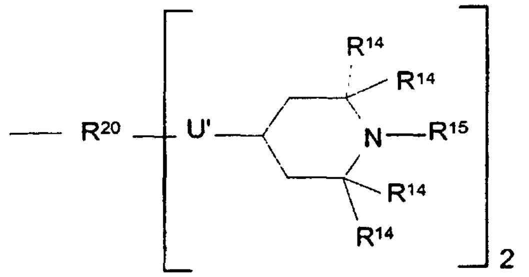

(VII)

- ♦ $R^{20}$ est choisi parmi les deux groupements trivalents de formules :

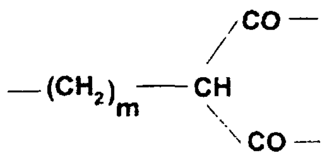 et 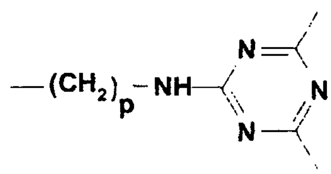

dans lequelles m représente un nombre de 2 à 20 et p représente un nombre de 2 à 20 ;

- ♦ U' représente -O- ou $NR^{21}$-, $R^{21}$ étant un radical choisi parmi un atome d'hydrogène, un radical alkyle linéaire ou ramifié comportant 1 à 6 atomes de carbone ;
- ♦ et $R^{14}$ et $R^{15}$ ont les mêmes significations que celles données à la formule (VI).

De préférence, l'agent aminé **M** contient une amine cyclique stériquement encombrée comportant en $\alpha$ de l'atome d'azote des groupements alkyles de 1 à 4 atomes de carbone. A titre d'exemple particulier, l'amine cyclique stériquement encombrée est une amine contenant au moins un motif pypéridinyle.

Les agents promoteurs d'adhérence **P** utilisés sont à base d'un silane organo-fonctionnel de formule :

$$(R^5HNR^6)Si(R^4)_a(OR^7)_{3-a}$$

dans laquelle :

- $R^4$ représente un radical hydrocarboné monovalent ayant de 1 à 6 atomes de carbone, un radical phényle, un radical vinyle,
- $R^5$ représente un atome d'hydrogène, un radical alkyle linéaire ou ramifié comprenant de 1 à 8 atomes de carbone pouvant contenir au moins un groupe amine primaire,
- $R^6$ représente un radical hydrocarboné divalent ayant de 1 à 6 atomes de carbone comprenant éventuellement une fonction éther,
- $R^7$ représente un groupe alkyle ou alcoxyalkyle ayant moins de 8 atomes de carbone,
- et a est égal à 0 ou 1.

En particulier, on utilise comme agent promoteur d'adhérence **P** les silanes de formule :

$(CH_3OCH_2CH_2O)_3Si\text{-}(CH_2)_2NH_2$ ; $(CH_3OCH_2CH_2O)_3Si\text{-}(CH_2)_3NH_2$ ; $(C_2H_5O)_3Si\text{-}(CH_2)_3O(CH_2)_3NH_2$ ; $(C_2H_5O)_2C_6H_5Si\text{-}(CH_2)_3O(CH_2)_3NH_2$ ; $(C_2H_5O)_3Si\text{-}CH_2O(CH_2)_2NH_2$ ; $(C_2H_5O)_3Si\text{-}(CH_2)_3O(CH_2)_2NH_2$ ; $(C_2H_5O)_2CH_3Si\text{-}(CH_2)_3NH_2$.

Et plus particulièrement, on utilisera les silanes suivants :

$(C_2H_5O)_3Si\text{-}(CH_2)_3NH_2$ ; $(CH_3O)_3Si\text{-}(CH_2)_3NH_2$ ;
$(CH_3O)_3Si\text{-}(CH_2)_3NH(CH_2)_2\ NH_2$ ;
et $(CH_3)(CH_3O)_2Si\text{-}(CH_2)_3NH(CH_2)_2NH_2$.

Les charges **G** se présentent sous la forme de produits minéraux très finement divisés dont le diamètre particulaire moyen est inférieur à 0,1 micron. Parmi ces charges figurent les silices de combustion, les silices de précipitation, les oxydes de titane et d'aluminium de combustion, et les noirs de fumée. Dans le cas où on utilise uniquement des charges **G** siliceuses, les compositions selon l'invention en contiennent de 2 à 40 parties en poids pour 100 parties en poids de polyorganosiloxane **A**.

Les charges **G** peuvent également se présenter sous la forme de produits minéraux et/ou organiques plus grossièrement divisés, de diamètre particulaire moyen supérieur à 0,1 micron ; parmi ces charges figurent le quartz broyé, les silices de diatomées, le carbonate de calcium, l'argile calcinée, l'oxyde de titane du type rutile, les oxydes de fer, de zinc, de chrome, de zirconium, de magnésium, les différentes formes d'alumine (hydratée ou non), le nitrure de bore, le lithopone, le métaborate de baryum, la poudre de liège, la sciure de bois, les phtalocyanines, les fibres minérales et organiques, les polymères organiques (polytétrafluoroéthylène, polyéthylène, polypropylène, polystyrène, polychlorure de vinyle).

Ces charges peuvent être modifiées en surface, et plus spécialement les charges d'origine minérale, par traitement avec les divers composés organosiliciques habituellement employés pour cet usage. Ainsi ces composés organosiliciques peuvent être des organochlorosilanes, des diorganocyclopolysiloxanes, des hexaorganodisiloxanes, des hexaorganodisilazanes ou des diorganocyclo-polysilazanes (brevets FR 1 126 884, FR 1 136 885, FR 1 236 505, GB 1 024 234). Les charges traitées renferment, dans la plupart des cas, de 3 à 30 % de leur poids de composés organosiliciques.

L'introduction des charges a pour but de conférer de bonnes caractéristiques mécaniques et rhéologiques aux élastomères découlant du durcissement des compositions conformes à l'invention. On peut introduire une seule espèce de charges ou des mélanges de plusieurs espèces.

En combinaison avec ces charges peuvent être utilisés des pigments minéraux et ou organiques ainsi que des agents améliorant la résistance thermique (sels et oxydes de terres rares tels que les oxydes et hydroxydes cériques) et/ou la résistance à la flamme des élastomères. Parmi les agents améliorant la résistance à la flamme peuvent être cités les dérivés organiques halogénés, les dérivés organiques du prosphore, les dérivés du platine tels que l'acide chloroplatinique (ses produits de réaction avec des alcanols, des éthers-oxydes), les complexes chlorure platineux-olefines Ces pigments et agents représentent ensemble au plus 20 % du poids des charges.

Comme indiqué auparavant, le catalyseur de durcissement **H** peut être choisi parmi les amines et sels de métaux dont Sn, Zn, Fe, Pb, Ba et Zr, et de préférence, les sels de Sn.

Pour ces types de catalyseur **H** , les amines et sels d'acides carboxyliques, en particulier les sels d'acides carboxyliques d'étain sont avantageusement employés (exemples: le dilaurate de dibutylétain, le dioctoate de dibutylétain, le stéarate de fer, l'octoate d'étain II et l'octoate de plomb).

Le catalyseur de durcissement **H** peut être aussi choisi parmi les dérivés organiques du titane et les chélates d'étain dont à titre d'exemple le bis(acétylacétonate) de dibutylétain.

D'autres agents auxiliaires et additifs peuvent être incorporés à la composition selon l'invention ; ceux-ci sont choisis en fonction des applications dans lesquelles sont utilisées lesdites compositions.

Les compositions conformes à l'invention sont stables au stockage en l'absence d'eau, durcissant dès température ambiante et notamment à des températures comprises entre 5 et 35°C en présence d'humidité. Le durcissement (ou la réticulation) s'effectue de l'extérieur à l'intérieur de la masse des compositions. Il se forme d'abord, en surface, une peau puis la réticulation se poursuit dans la masse.

Ces compositions peuvent être employées pour de multiples applications comme le jointoiement dans l'industrie du bâtiment, l'assemblage et le collage de matériaux les plus divers (métaux ; matières plastiques comme par exemple le PVC, le PMMA ; les caoutchoucs naturels et synthétiques ; bois ; carton ; faïence ; brique ; verre ; pierre ; béton ; éléments de maçonnerie), et ceci aussi bien dans le cadre de l'industrie du bâtiment que dans celui des industries de l'automobile, de l'électroménager et de l'électronique.

Les compositions conformes à l'invention conduisent, après durcissement, à des élastomères dont l'adhérence est très bonne sur divers substrats et qui présentent l'avantage de ne pas jaunir au cours du temps sous l'action oxydante de l'air.

**Exemples.**

Les exemples ci-dessous concernent des préparations de compositions selon l'invention et des compositions témoins non conforme à l'invention. Pour chaque composition, les évolutions d'indice de jaune sont mesurées à température ambiante, à 50°C ou à 70°C.

**I. Compositions de mastics alcoxy chargées blanches/ivoires.**

Préparation A :

Fonctionnalisation.

Dans un mélangeur tripale de 2 litres, 600 g d'huile polydiméthylsiloxane $\alpha,\omega$ hydroxylée de viscosité 175 000 mPa.s et 240 g d'huile 47V100 sont chargés et mélangés. On ajoute et mélange ensuite 30 g de vinyltriméthoxysilane. On introduit ensuite 5,1 g de catalyseur de fonctionnalisation (LiOH, H2O à 4 % dans le méthanol).

Compoundage.

On introduit ensuite progressivement au sein du milieu de fonctionnalisation, 57 g de silice de combustion puis on mélange. On ajoute de façon identique 600 g de carbonate de calcium type BLR3 de Omya.

Puis, on ajoute au sein du milieu un mélange de 6 g de $\beta$-aminoéthyl $\gamma$-aminopropyl méthyldiméthoxy silane (= silane 1411 de Huels-Sivento), 9 g de N-méthyl- $\gamma$-aminopropyl triméthoxy silane (silane 1110 de Huels) et de 0,36 g de catalyseur à base de dibutyl étain et de bisacétylacétonate de dibutyl étain.

On additionne finalement 1,55 g de composé UVASIL 299 d'Enichem (soit 0.1 % en poids) puis, on agite quelques minutes sous vide.

Préparation B :

La préparation B est identique à la préparation A, à l'exception de la quantité de UVASIL 299 d'Enichem. Dans la préparation B, on ajoute 4,7 g de UVASIL 299 d'Enichem (soit 0.3 % en poids).

Préparation C :

La préparation C est identique à la préparation A, à l'exception de la quantité de UVASIL 299 d'Enichem. Dans la préparation C, on ajoute 9,4 g de UVASIL 299 d'Enichem (soit 0.6 % en poids).

Préparation D :

La préparation D est identique à la préparation A, à l'exception de la quantité de UVASIL 299 d'Enichem. Dans la préparation D, on ajoute 15,5 g de UVASIL 299 d'Enichem (soit 1 % en poids)

Préparation E :

La préparation E est identique à la préparation A, à l'exception de la quantité de UVASIL 299 d'Enichem. Dans la préparation E, on ajoute 31 g de UVASIL 299 d'Enichem (soit 2 % en poids)

Préparation Témoin 1 :

La préparation Témoin est similaire à la préparation A mais sans UVASIL 299 d'Enichem.

Mesures de l'indice de jaune.

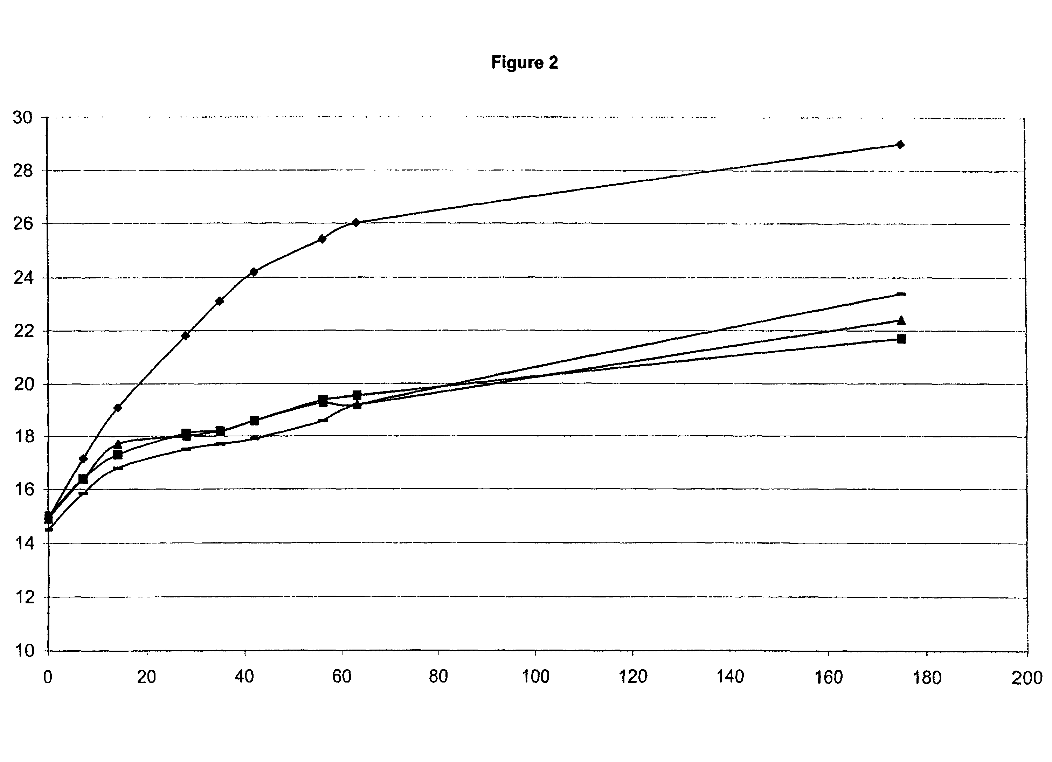

La mesure de l'indice de jaune est effectuée à température ambiante (figure 1) et à 50°C (figure 2).

Cette mesure est effectuée selon le protocole suivant.

Une fraction de la composition est étendue à la râcle sur une surface de façon à réaliser un film de 2 mm d'épaisseur. On laisse réticuler le film pendant 7 jours à température ambiante ou à 50°C et à une humidité relative de 50 %. Le film ainsi réticulé est ensuite introduit dans une étuve à 100°C pendant 7 jours.

Le film réticulé, après son séjour dans l'étuve, est placé sur le spectrocolorimètre (référence SPECTRO SENSOR II de la société ACS). On travaille en réflexion avec l'accessoire dit "illuminant C" (qui représente le rayonnement de la lumière moyenne du jour) et en utilisant une grande ouverture (10° d'angle).

Dans ces conditions, on peut calculer un indice de jaune ; il s'agit de l'Indice de Jaune (1925), défini de la manière suivante :

$$\text{Indice de Jaune (1925)} = \frac{12.8X - 106.Z}{Y}$$

où X, Y et Z sont les valeurs trichromatiques de la C.I.E. (Commission Internationale de l'Eclairage). Plus l'indice est faible, moins l'échantillon est jaune.

Résultats

Les figures 1 et 2 présentent l'évolution des valeurs de l'indice de jaune (ordonnée) en fonction du temps (unité = jour) des compositions A à E réticulées et du témoin 1 réticulé.

Légende de la figure 1 :

♦ Témoin 1
■ 0,1 % Uvasil
▲ 0,3 % Uvasil
x 0,6 % Uvasil
* 1 % Uvasil
• 2 % Uvasil

Légende de la figure 2 :

♦ Témoin 1
■ 0,6 % Uvasil
▲ 1 % Uvasil
- 2 % Uvasil

Les résultats de la figure 1 concernent des compositions réticulées avec séjour à 23°C et les résultats de la figure 2 concernent des compositions réticulées avec séjour à 50°C.

On constate une très nette diminution du jaunissement en présence d'Uvasil 299. Une quantité de 0,3 à 0,6 % est déjà très efficace.

**II. Compositions de mastics alcoxy translucides.**

Préparation F :

Fonctionnalisation.

Dans un mélangeur tripale de 2 litres, 600 g d'huile polydiméthylsiloxane $\alpha,\omega$ hydroxylée de viscosité 80 000 mPa.s et 120 g d'huile 47V100 sont chargés et mélangés. On ajoute et mélange ensuite 30 g de vinyltriméthoxysilane. On introduit ensuite 4 g de catalyseur de fonctionnalisation (LiOH, H2O à 4 % dans le méthanol).

Compoundage.

On introduit ensuite progressivement au sein du milieu de fonctionnalisation, 60 g de silice de combustion puis on mélange.

Puis, on ajoute au sein du milieu un mélange de 7,2 g de $\beta$-aminoéthyl $\gamma$-aminopropyl méthyldiméthoxy silane (= silane 1411 de Huels) et de 0,6 g de catalyseur à base de dibutyl étain et de bisacétylacétonate de dibutyl étain.

On additionne finalement 4,4 g de composé Tinuvin 765 de Ciba Ceigy (soit 0.1 % en poids) puis, on agite quelques minutes sous vide.

Préparation témoin 2 :

La préparation témoin est similaire à la préparation A mais sans Tinuvin 765.

Mesures de l'indice de jaune :

La mesure de l'indice de jaune de la préparation F et du témoin 2 est effectuée selon un protocole similaire

à celui utilisé pour les préparations A à E et du témoin 1. Les mesures de l'indice de jaune sont effectuées après un séjour du film réticulé soit à température ambiante ou soit à 70°C.

Résultats

Voir tableaux 1 (mesures après séjour à température ambiante) et 2 (mesures après séjour à 70°C). On note une nette diminution du jaunissement en présence de 0,5 % de Tinuvin 765.

Tableau 1.

| | 7 jours | 21 jours | 42 jours |
|---|---|---|---|
| Témoin 2 | 15,5 | 19,5 | 22 |
| Préparation F | 15.5 | 18 | 18 |

Tableau 2.

| | 7 jours | 21 jours | 42 jours |
|---|---|---|---|
| Témoin 2 | 18 | 26 | 33 |
| Préparation F | 17 | 22 | 22.,5 |

**Revendications**

1. Composition monocomposante et non jaunissante à base de polyorganosiloxane(s), stable au stockage en absence d'humidité et réticulant en présence d'humidité en élastomère non jaunissant et adhérent, **caractérisée en ce qu'**elle comprend

   (1i) 100 parties en poids d'au moins un polyorganopolysiloxane linéaire réticulable **A** de formule :

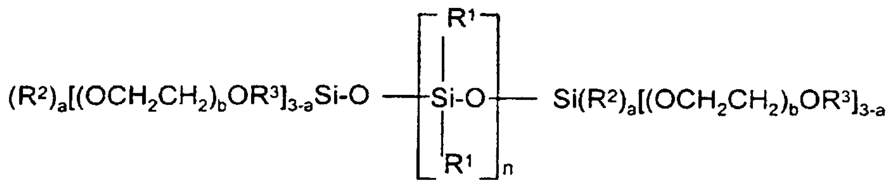

dans laquelle :

- les substituants $R^1$, identiques ou différents, représentent chacun un radical monovalent hydrocarboné saturé ou non en $C_1$ à $C_{13}$, substitué

  ou non substitué, aliphatique, cyclanique ou aromatique ;

- les substituants $R^2$, identiques ou différents, représentent chacun un radical monovalent hydrocarboné saturé ou non en $C_1$ à $C_{13}$, substitué

  ou non substitué, aliphatique, cyclanique ou aromatique ;

- les substituants $R^3$, identiques ou différents, représentent chacun un radical alkyle, linéaire ou ramifié, en $C_1$ à $C_8$ ;
- n a une valeur suffisante pour conférer au polyorganopolysiloxane **A** une viscosité dynamique à 25°C allant de 1.000 à 1.000.000 mPa.s ;
- a est zéro ou 1 ;
- b représente zéro ou 1 ;

(2i) 2 à 170 parties en poids de charges minérales **G** ;
(3i) une quantité efficace d'un catalyseur de durcissement **H** choisi parmi :

- les amines et sels de métaux dont le Sn, Zn, Fe, Pb, Ba et Zr,
- les dérivés organiques du titane,
- et les chélates d'étain,

(4i) 0,2 à 6 parties en poids d'un agent aminé **M** constitué d'au moins une amine cyclique encombrée ; (5i) 0,2 à 8 parties en poids d'au moins un agent promoteur d'adhérence **P** choisi parmi les composés organosiliciques portant à la fois (1) au moins un groupe hydrolysable lié à l'atome de silicium et (2) au moins un groupe organique comprenant un radical alkyle linéaire ou ramifié comprenant de 1 à 8 atomes de carbone dont au moins l'un des carbones porte un groupement amine primaire ou secondaire.

2. Composition selon la revendication 1, **caractérisée en ce que** l'agent aminé **M** comporte au moins une amine cyclique stériquement encombrée comportant en $\alpha$ de l'atome d'azote des groupements alkyles de 1 à 4 atomes de carbone.

3. Composition selon la revendication précédente, **caractérisée en ce que** l'amine cyclique steriquement encombrée est un motif pypéridinyle.

4. Composition selon la revendication précédente, **caractérisée en ce que** l'amine cyclique stériquement encombrée est une amine contenant au moins un motif pyperidinyle.

5. Composition selon l'une quelconque des revendications précédentes, **caractérisée en ce que** l'agent promoteur d'adhérence **P** est à base d'un silane organo-fonctionnel de formule :

$$(R^5HNR^6)Si(R^4)_a(OR^7)_{3-a}$$

dans laquelle

- $R^4$ représente un radical hydrocarboné monovalent ayant de 1 à 6 atomes de carbone, un radical phényle, un radical vinyle.
- $R^5$ représente un atome d'hydrogène, un radical alkyle linéaire ou ramifié comprenant de 1 à 8 atomes de carbone pouvant contenir au moins un groupe amine primaire,
- $R^6$ représente un radical hydrocarboné divalent ayant de 1 à 6 atomes de carbone comprenant éventuellement une fonction éther,
- $R^7$ représente un groupe alkyle ou alcoxyalkyle ayant moins de 8 atomes de carbone,
- et a est égal à 0 ou 1.

**6.** Composition selon l'une quelconque des revendications précédentes, **caractérisée en ce qu'**elle comprend au moins un diorganopolysiloxane linéaire non réactif F de formule :

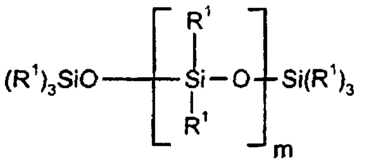

(III)

dans laquelle :

+ les substituants $R^1$, identiques ou différents, ont les mêmes significations que celles données ci-avant pour le polyorganopolysiloxane réactif A de formule (I) ;
+ m a une valeur suffisante pour conférer aux polymères de formule (III).

**7.** Composition selon l'une quelconque des revendications précédentes, **caractérisée en ce que** les substituants $R^1$ des polymères **A** et des polymères facultatifs **F** sont choisis dans le groupe formé par :

- les radicaux alkyles et halogénoalkyles ayant de 1 à 13 atomes de carbone,
- les radicaux cycloalkyles et halogénocycloalkyles ayant de 5 à 13 atomes de carbone,
- les radicaux alcényles ayant de 2 à 8 atomes de carbone,
- les radicaux aryles et halogénoaryles mononucléaires ayant de 6 à 13 atomes de carbone,
- les radicaux cyanoalkyles dont les chaînons alkyles ont de 2 à 3 atomes de carbone.

**8.** Composition selon la revendication 7, **caractérisée en ce que** les substituants $R^1$ sont les radicaux méthyle, éthyle, propyle, isopropyle, n-hexyle, phényle, vinyle et 3,3,3-trifluoropropyle.

**9.** Composition selon l'une quelconque des revendications précédentes **caractérisée en ce que** le catalyseur de durcissement **H** est choisi parmi des dérivés de l'étain dont les sels d'étain, les chélates d'étain et/ou les sels d'acides carboxyliques d'étain.

**10.** Elastomère non jaunissant adhérant sur divers substrats, obtenu par durcissement, à des températures allant de 5 à 35°C sous l'action de l'humidité, des compositions selon l'une quelconque des revendications **1** à **10**.

**Patentansprüche**

**1.** Nicht vergilbende Einkomponenten-Zusammensetzung auf der Basis von Polyorganosiloxan(en), die bei Abwesenheit von Feuchtigkeit lagerstabil sind und in Anwesenheit von Feuchtigkeit zu einem nicht vergilbenden und haftenden Elastomer vernetzen, **dadurch gekennzeichnet, daß** sie umfassen
(1i) 100 Gewichtsteile von mindestens einem vernetzbaren linearen Polyorganopolysiloxan A der Formel

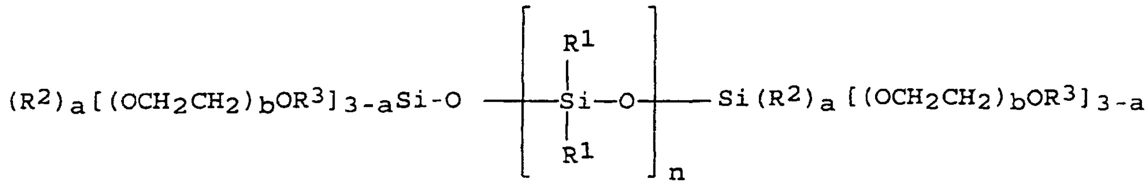

in der

- die Substituenten $R^1$, gleich oder verschieden, jeweils einen gesättigten oder ungesättigten, substituierten oder unsubstituierten aliphatischen, cyclanischen oder aromatischen, monovalenten Kohlenwasserstoff-Rest mit 1 bis 13 Kohlenstoffatomen darstellen;
- die Substituenten $R^2$, gleich oder verschieden, jeweils einen gesättigten oder ungesättigten, substituierten oder unsubstituierten aliphatischen, cyclanischen oder aromatischen, monovalenten Kohlenwasserstoff-Rest mit 1 bis 13 Kohlenstoffatomen darstellen;
- die Substituenten $R^3$, gleich oder verschieden, jeweils einen linearen oder verzweigten Rest Alkyl mit 1 bis 8 Kohlenstoffatomen darstellen;
- n einen ausreichenden Wert besitzt, um dem Polyorganopolysiloxan A eine dynamische Viskosität A bei 25 °C von 1.000 bis 1.000.000 mPa.s zu verleihen;
- a gleich 0 oder 1 ist;
- b gleich 0 oder 1 ist;

  (2i) 2 bis 170 Gewichtsteile von mineralischen Füllstoffen G; (3i) eine wirksame Menge eines Härtungskatalysators H, ausgewählt unter:

- den Aminen und Metallsalzen von Sn, Zn, Fe, Pb, Ba und Zr,
- den organischen Derivaten von Titan, und
- den Chelaten von Zinn,

  (4i) 0,2 bis 6 Gewichtsteile eines aminierten Mittels M, bestehend aus mindestens einem sterisch sperrigen cyclischen Amins; (5i) 0,2 bis 8 Gewichtsteile von mindestens einem Haftpromotor-Mittel P, ausgewählt unter den Organosilicium-Verbindungen, die sowohl (1) mindestens eine hydrolysierbare Gruppe, die an das Siliciumatom gebunden ist, als auch (2) mindestens eine organische Gruppe tragen, die einen linearen oder verzweigten Rest Alkyl mit 1 bis 8 Kohlenstoffatomen umfaßt, bei dem mindestens einer der Kohlenstoffe eine primäre oder sekundäre Aminogruppe trägt.

2. Zusammensetzung nach Anspruch 1, **dadurch gekennzeichnet, daß** das aminierte Mittel M mindestens ein sterisch sperriges cyclisches Amin umfaßt, das seinerseits in $\alpha$ vom Stickstoffatom Alkylgruppen mit 1 bis 4 Kohlenstoffatomen aufweist.

3. Zusammensetzung nach vorstehendem Anspruch, **dadurch gekennzeichnet, daß** das sterisch sperrige cyclische Amin eine Struktureinheit Piperidinyl ist.

4. Zusammensetzung nach vorstehendem Anspruch, **dadurch gekennzeichnet, daß** das sterisch sperrige cyclische Amin ein Amin ist, das mindestens eine Struktureinheit Piperidinyl enthält.

5. Zusammensetzung nach irgendeinem der vorstehenden Ansprüche, **dadurch gekennzeichnet, daß** das Haftpromotor-Mittel P auf der Basis von einem organofunktionellen Silan der Formel:

$$(R^5HNR^6)Si(R^4)_a(OR^7)_{3-a}$$

besteht, in der

- $R^4$ einen monovalenten Kohlenwasserstoff-Rest mit 1 bis 6 Kohlenstoffatomen, einen Rest Phenyl, einen Rest Vinyl darstellt,
- $R^5$ ein Wasserstoffatom, einen linearen oder verzweigten Rest Alkyl mit 1 bis 8 Kohlenstoffatomen darstellt, der mindestens eine primäre Aminogruppe enthalten kann,
- $R^6$ einen divalenten Kohlenwasserstoff-Rest mit 1 bis 6 Kohlenstoffatomen darstellt, der gegebenenfalls eine

Etherfunktion umfaßt,

- $R^7$ eine Gruppe Alkyl oder Alkoxyalkyl mit mindestens 8 Kohlenstoffatomen darstellt, und
- a gleich 0 oder 1 ist.

**6.** Zusammensetzung nach irgendeinem der vorstehenden Ansprüche, **dadurch gekennzeichnet, daß** sie mindestens ein nicht reaktives, lineares Diorganopolysiloxan F der Formel (III)

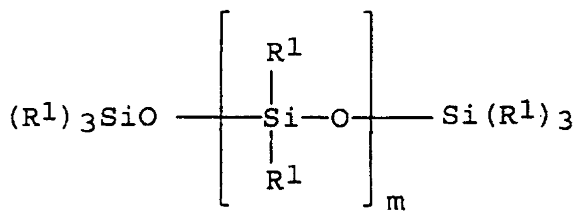

(III)

umfaßt, in der

+ die Substituenten $R^1$, gleich oder verschieden, die gleichen Bedeutungen besitzen, wie sie oben bei dem reaktiven Polyorganopolysiloxan A der Formel (I) angegeben sind;

+ m einen ausreichenden Wert besitzt, um den Polymeren der Formel (III) zu verleihen.

**7.** Zusammensetzung nach irgendeinem der vorstehenden Ansprüche, **dadurch gekennzeichnet, daß** die Substituenten $R^1$ der Polymeren A und der fakultativen Polymeren F aus der Gruppe gewählt werden, die gebildet wird durch:

- die Reste Alkyl und Halogenalkyl mit 1 bis 13 Kohlenstoffatomen,
- die Reste Cycloalkyl und Halogencycloalkyl mit 5 bis 13 Kohlenstoffatomen,
- die Reste Alkenyl mit 2 bis 8 Kohlenstoffatomen,
- die einkernigen Reste Aryl und Halogenaryl mit 6 bis 13 Kohlenstoffatomen,
- die Reste Cyanoalkyl, bei denen die Alkylketten 2 bis 3 Kohlenstoffatome besitzen.

**8.** Zusammensetzung nach Anspruch 7, **dadurch gekennzeichnet, daß** die Substituenten $R^1$ Reste Methyl, Ethyl, Propyl, Isopropyl, n-Hexyl, Phenyl, Vinyl und 3,3,3-Trifluorpropyl sind.

**9.** Zusammensetzung nach irgendeinem der vorstehenden Ansprüche, **dadurch gekennzeichnet, daß** der Härtungskatalysator H unter den Derivaten von Zinn ausgewählt wird, von denen die Salze von Zinn, die Chelate von Zinn und/oder die Carbonsäuresalze von Zinn zu nennen sind.

**10.** Nicht vergilbendes und auf verschiedenen Substraten haftendes Elastomer, erhalten durch Härtung der Zusammensetzungen nach irgendeinem der Ansprüche 1 bis 10 bei Temperaturen von 5 °C bis 35 °C unter der Einwirkung von Feuchtigkeit.

## Claims

**1.** Single-component and non-yellowing composition based on polyorganosiloxane(s) which is stable on storage in the absence of moisture and which crosslinks in the presence of moisture into a non-yellowing and adherent elastomer, **characterized in that** it comprises:

(1i) 100 parts by weight of at least one linear crosslinkable polyorganopolysiloxane **A** of formula:

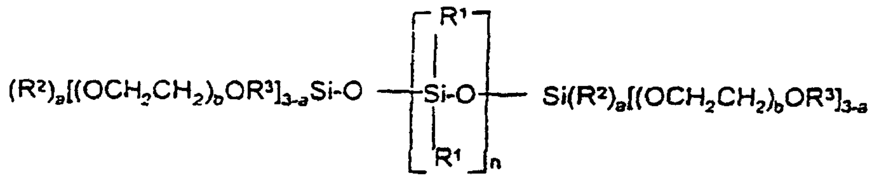

in which:

- the $R^1$ substituents, which are identical or different, each represent an aliphatic, cyclanic or aromatic, saturated or unsaturated, substituted or unsubstituted, $C_1$ to $C_{13}$ monovalent hydrocarbonaceous radical;
- the $R^2$ substituents, which are identical or different, each represent an aliphatic, cyclanic or aromatic, saturated or unsaturated, substituted or unsubstituted, $C_1$ to $C_{13}$ monovalent hydrocarbonaceous radical;
- the $R^3$ substituents, which are identical or different, each represent a linear or branched $C_1$ to $C_8$ alkyl radical;
- n has a value sufficient to confer, on the polyorganopolysiloxane **A,** a dynamic viscosity at 25°C ranging from 1 000 to 1 000 000 mPa·s;
- a is zero or 1;
- b represents zero or 1;

(2i) 2 to 170 parts by weight of inorganic fillers **G;**
(3i) an effective amount of a curing catalyst **H** chosen from:

- amines and metal salts, including those of Sn, Zn, Fe, Pb, Ba and Zr,
- organic titanium derivatives,
- and tin chelates;

(4i) 0.2 to 6 parts by weight of an amino agent **M** composed of at least one hindered cyclic amine;
(5i) 0.2 to 8 parts by weight of at least one adhesion promoter **P** chosen from organosilicon compounds carrying both (1) at least one hydrolysable group bonded to the silicon atom and (2) at least one organic group comprising a linear or branched alkyl radical comprising from 1 to 8 carbon atoms, at least one of the carbons of which carries a primary or secondary amine group.

**2.** Composition according to Claim 1, **characterized in that** the amino agent **M** comprises at least one sterically hindered cyclic amine comprising alkyl groups with 1 to 4 carbon atoms in the position $\alpha$ to the nitrogen atom.

**3.** Composition according to the preceding claim, **characterized in that** the sterically hindered cyclic amine is a piperidinyl unit.

**4.** Composition according to the preceding claim, **characterized in that** the sterically hindered cyclic amine is an amine comprising at least one piperidinyl unit.

**5.** Composition according to any one of the preceding claims, **characterized in that** the adhesion promoter **P** is based on an organofunctional silane of formula:

$$(R^5HNR^6)Si(R^4)_a(OR^7)_{3-a}$$

in which:

- $R^4$ represents a monovalent hydrocarbonaceous radical having from 1 to 6 carbon atoms, a phenyl radical or a vinyl radical,
- $R^5$ represents a hydrogen atom or a linear or branched alkyl radical comprising from 1 to 8 carbon atoms which can comprise at least one primary amine group,
- $R^6$ represents a divalent hydrocarbonaceous radical having from 1 to 6 carbon atoms, optionally comprising an ether functional group,

- $R^7$ represents an alkyl or alkoxyalkyl group having less than 8 carbon atoms,
- and a is equal to 0 or 1.

6. Composition according to any one of the preceding claims, **characterized in that** it comprises at least one nonreactive linear diorganopolysiloxane **F** of formula:

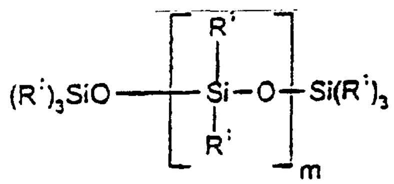

(III)

in which:

+ the $R^1$ substituents, which are identical or different, have the same meanings as those given above for the reactive polyorganopolysiloxane **A** of formula (I);
+ m has a value sufficient to confer, on the polymers of formula (III), a dynamic viscosity at 25°C ranging from 10 to 200 000 mPa·s.

7. Composition according to any one of the preceding claims, **characterized in that** the $R^1$ substituents of the polymers **A** and of the optional polymers **F** are chosen from the group formed by:

- alkyl and haloalkyl radicals having from 1 to 13 carbon atoms,
- cycloalkyl and halocycloalkyl radicals having from 5 to 13 carbon atoms,
- alkenyl radicals having from 2 to 8 carbon atoms,
- mononuclear aryl and haloaryl radicals having from 6 to 13 carbon atoms,
- cyanoalkyl radicals, the alkyl linkages of which have from 2 to 3 carbon atoms.

8. Composition according to Claim 7, **characterized in that** the $R^1$ substituents are methyl, ethyl, propyl, isopropyl, n-hexyl, phenyl, vinyl and 3,3,3-trifluoropropyl radicals.

9. Composition according to any one of the preceding claims, **characterized in that** the curing catalyst **H** is chosen from tin derivatives, including tin salts, tin chelates and/or tin salts of carboxylic acids.

10. Non-yellowing elastomer which adheres to various substrates, obtained by curing, at temperatures ranging from 5 to 35°C under the action of moisture, the compositions according to any one of Claims 1 to 10.

Figure 1

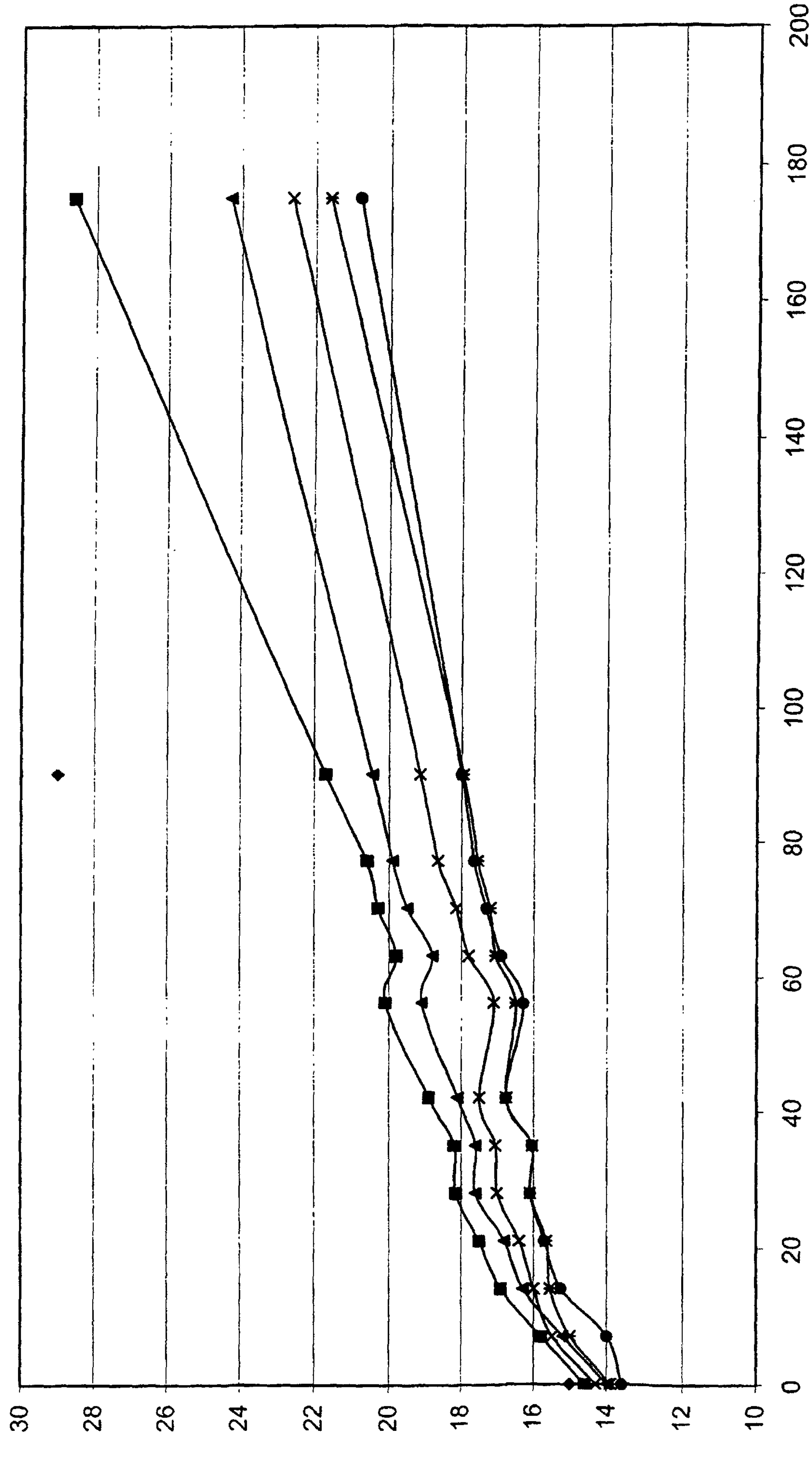

Figure 2